# EUROPÄISCHE PATENTSCHRIFT

(11) **EP 2 788 432 B1**
(45) Veröffentlichungstag und Bekanntmachung des Hinweises auf die Patenterteilung: **20.01.2016**
(21) Anmeldenummer: 13706189.1
(22) Anmeldetag: 07.02.2013
(51) Int. Cl.: C09C 1/04, C09C 1/24, C09D 7/12, C08K 9/04, B29K 105/00, B29C 47/00, B29K 27/06, B29C 45/00

(54) **SÄUREFEST GECOATETE PIGMENTE**
ACID-RESISTANT COATED PIGMENTS
PIGMENTS DOTÉS D'UN REVÊTEMENT RÉSISTANT À L'ACIDE

(30) Priorität: 11.02.2012 DE 102012002824
(43) Veröffentlichungstag der Anmeldung: 15.10.2014
(73) Patentinhaber: Ley & Co. Farbenwerke Wunsiedel KG, 95615 Marktredwitz-Brand (DE)
(72) Erfinder: NÜRNBERGER, Michael, 95615 Marktredwitz-Brand (DE)
(74) Vertreter: Viering, Jentschura & Partner mbB Patent- und Rechtsanwälte
(86) Internationale Anmeldenummer: PCT/EP2013/052432
(87) Internationale Veröffentlichungsnummer: WO 2013/117642

(56) Entgegenhaltungen:
- GB-A- 1 265 092
- JP-B1- S4 833 255
- US-A- 6 083 490

## Beschreibung

Die Erfindung betrifft die Verwendung bestimmter säurefest gecoateter Pigmente in PVC. sowie einen PVC-Kunststoff mit säurefest gecoateten Pigmenten.

Eisenoxidpigmente finden einen breiten Einsatz als, kostengünstige Rot-, Gelb-, Braun und Schwarzpigmente. Der Einsatz von Eisenoxidpigmenten ist allerdings bei der thermoplastischen Verarbeitung des Kunststoffes PVC nur begrenzt möglich, da der unter den Produktionsbedingungen bei Temperaturen von 180 bis 200 °C entstehende gasförmige Chlorwasserstoff (HCl-Dampf) mit den Eisenoxiden zu Eisenchlorid reagiert. Eisenchlorid wiederum katalysiert die weitere Zersetzung des PVC's. Die Folge der weiteren Zersetzung ist die so genannte Brennerbildung, Brenner sind verbrannte, braun gefärbte Bereiche, die sich partiell auf dem thermoplastisch verformten Kunststoffteil zeigen. Unbeständig gegenüber HCI-Dampf und damit säurelöslich sind dabei die Eisenoxide Fe₂O₃ (rot), FeOOH (gelb), Fe₃O₄, aber auch Fe-Mn-Mischoxide (braun, schwarz), Fe-Zn-Mischoxide (Zinkferrit, gelb) und ZnO (weiß).

Auch so genannte Thermo- und Säurestabilisatoren, die zum Roh-PVC zugegeben werden, können die Zersetzung des PVC beim Vorhandensein der gegen HCI-Dampf unbeständigen zink-, eisen- oder manganhaltigen Pigmente, nicht vollständig verhindern.

Bisher werden Eisenoxidpigmente mit anorganischen Coatings auf Basis von Aluminiumhydroxid und Siliziumdioxid durch Ausfällen aus wässriger Lösung und anschließendem Trocknen und Aufmahlen gewonnen. Das Coating ist jedoch unvollständig, so dass trotz des vorhandenen Coatings eine signifikante Löslichkeit des Pigmentkerns gegenüber HCI-Dampf verbleibt und damit bei der thermoplastischen Verarbeitung Brennerbildung am PVC zu beobachten ist.

Aus dem Stand der Technik ist folgende Schrift bekannt:

In der Patentveröffentlichung DE 1 519 544 sind Feststoffpartikel beschrieben, die mit Pentaerythrit gecoatet sind. Das Pentaerythrit fungiert als Tensid und wird aus der wässrigen Lösung heraus auf die Feststoffpartikel durch einen so genannten Umhüllungsprozess aufgebracht. Das Verfahren unterscheidet sich von dem unten beschriebenen beispielhaften Verfahren zur Herstellung der säurefest gecoateten Pigmente wesentlich. Weiterhin sind keine Angaben zur Mantelflächenbelegung des Pentaerythrits an den Feststoffpartikeln gemacht Da es bei der Verwendung der Feststoffteilchen um ein verbessertes Dispergierverhaften geht, ist anzunehmen, dass der Flächeribelegungsgrad sehr viel weniger als 85% beträgt.

Es existiert weiterhin eine Vielzahl von Veröffentlichungen, die das Coaten von Partikeln über das so genannte Wirbelschicht- oder Trommelcoatingverfahren beschreiben. Bei diesen Verfahren wird die Coatingsubstanz in flüssiger oder suspendierter Form über Düsen eingesprüht und somit in feinteiliger Beschaffenheit mit den zu coatenden Partikeln in Verbindung gebracht. Verdampft wird lediglich das Lösemittel, nicht aber die Coatingsubstanz. Nach aktuellem Stand lassen sich die Anlagen bei 220-260°C nicht betreiben. Diese Verfahren eignen sich weiterhin nur für Partikel mit einer Korngröße von mehr als 1µm, da die Vereinzelung der Partikel im Wirbelbett an seine Grenze stößt und die Partikeln agglomerieren.

GB 896,067 A offenbart Titandioxid-Partikel, welche zur Verbesserung ihrer Dispergierbarkeit mit einer Beschichtung enthaltend Pentaerythrit beschichtet sind.

DE 102 09 698 A1 offenbart ein Verfahren zur Herstellung von gecoateten, feinteiligen, anorganischen Festkörpern, bei dem die Oberfläche von feinteiligen, anorganischen Festkörperpartikeln mit mindestens zwei verschiedenen organischen Additiven belegt wird. Eines der Additive kann z.B. Pentaerythrit sein.

DE 27 33 734 offenbart ein Verfahren zur Behandlung anorganischer Oxidpigmente, insb. von Titandioxid-Partikeln.

GB 1 265 092 A offenbart ein leicht zu dispergierendes anorganisches Pigment, dessen Oberfläche eine nicht-ionische Substanz trägt, die aus einem Polyol mit zumindest drei OH-Gruppen besteht, das mit zumindest einem monofunktionalen Alkohol verethert ist. Das Pigment kann zum Beispiel Eisenoxid sein. Zur Herstellung des Ether-Produkts kann als das Polyol-Edukt Pentaerythrit verwendet werden.

JP S48 33255 B1 offenbart ein Eisenoxidpigment mit hoher Dispergierbarkeit. Das Pigment kann zum Beispiel mit Pentaerythritol-Tetrabenzoat behandelt sein.

Aufgabe der Erfindung ist es, das eingangs beschriebene Brennerproblem zu lösen. Erfindungsgemäß wird dabei eine solche Lösung angegeben, damit/dass die eingangs genannten Pigmente auch bei der thermoplastischen Verarbeitung von PVC ohne schädliche Brennerbildung eingesetzt werden können.

Die zuvor geschilderte Aufgabe wird gelöst durch die in Anspruch 1 angegebene Verwendung von säurefest gecoateten Pigmenten in PVC. Weitere Ausführungsformen sind in den Ansprüchen 2 bis 6 beschrieben. Anspruch 7 beschreibt die Kombination von PVC und säurefest gecoateten Pigmenten, entsprechende weitere Ausführungsformen sind in den Ansprüchen 8 bis 12 beschrieben.

Die säurelöslichen Pigmente können dabei mit einem Coating aus organischen Verbindungen bedampft werden/sein. Der Schmelzpunkt der aufgedampften organischen Verbindung liegt bei über 200°C und bevorzugt bei über 240°C, damit das Coating auch während des thermoplastischen Formgebungsprozesses von PVC an der Oberfläche der säurelöslichen Pigmentpartikel haften bleibt. Wäre der Schmelzpunkt der organischen Verbindung niedriger, so bestünde die Gefahr, dass diese bei den üblichen Verarbeitungstemperaturen von PVC von 180 bis 200°C schmilzt und damit ihren Einsatzzweck nicht erfüllen kann. Die bei T>200°C schmelzenden organischen Verbindungen sind Pentaerythrit, Dipentaerythrit oder Benzoltricarbonsäure. Pentaerythrit ist auch unter der Bezeichnung Pentaerythritol oder 2,2-Bis(hydroxymethyl)1,3-propandiol bekannt und hat einen Schmelzpunkt von 262°C. Dipentaerythrit ist unter der Bezeichnung 1,3-Propandiol, 2,2-(oxybis(methylen)bis(2-(hydroxymethyl)) bekannt und hat einen Schmelzpunkt von ca. 218°C. Benzoitricarbonsäure umfasst 1,2,4-Benzoltricarbonsäure mit einem Schmelzpunkt von 231 °C und 1,2,3-Benzoltricarbonsäure sowie 1,3,5-Benzoltricarbonsäure.

Das Coating bzw. die Beschichtung kann aber auch mit einem alternativen Verfahren auf die säurelöslichen Pigmente aufgebracht werden/sein, z.B. aufgeschmolzen werden.

Säurelösliche Pigmente stellen die Basispigmente bzw. die Edukte bzw. den jeweiligen Kern der säurefest gecoateten Pigmente dar und sind aus den folgenden Pigmenten ausgewählt: Eisenoxide Fe₂O₃(rot), FeOOH (gelb), Fe₃O₄ (schwarz), aber auch Fe-Mn-Mischoxide (braun, schwarz), Fe-Zn-Mischoxide (Zinkferrit, gelb) und ZnO (weiß). Die säurelöslichen Pigmente haben z.B. eine mittlere Teilchengröße von weniger als 5 µm, z.B. von weniger als 1 µm. Die säurelöslichen Pigmente können ihrerseits bereits ein Coating oder eine andersartige Umhüllung des Basispigmentkorns aufweisen. Die genannten Pigmente werden als säurelöslich bezeichnet, da sie beim Knetertest (siehe Bsp. Pkt. 2) eine schnelle Zersetzung des PVC generieren (infolge einer Reaktion mit HCI-Dampf). Die säurefest gecoateten Pigmente zeichnen sich hingegen dadurch aus, dass die Oberfläche der säurelöslichen Pigmente durch das Coating vor dem Angriff von heißem HCI-Dampf geschützt ist.

Die bei T>200°C schmelzende organische Verbindung wird z.B. auf die Oberfläche der säurelöslichen Pigmente aufgedampft oder anderweitig auf die Oberfläche aufgebracht. Unter Aufdampfen ist das Überführen der bei T>200°C schmelzenden organischen Verbindung in die gasförmige Phase durch Verdampfen oder Sublimieren und das anschließende Kondensieren oder Resublimieren auf der Mantelfläche der säurelöslichen Pigmente zu verstehen. Als Reaktoren zum Coatingvorgang können ein Unterdruck-Intensivheizmischer oder eine Mechanofusionsmühle dienen. Bevorzugt wird der Reaktor unter Unterdruck von weniger als 40 mbar betrieben.

Das Verdampfen der bei T>200°C schmelzenden organischen Verbindung kann auch unvollständig von statten gehen, so dass das Coating nicht zu 100% aufgedampft, sondern auch teilweise auf die Oberfläche der säurelöslichen Pigmente aufgeschmolzen ist. Das Sublimieren kann ebenfalls unvollständig von statten gehen, so dass noch Reste von nicht sublimiertem Coatingausgangsstoff neben dem säurefest gecoateten Pigmenten verbleiben.

Der Flächenbelegungsgrad des Coatings auf der Mantelfläche der säurelöslichen Pigmente ist im Mittel z.B. größer als 85%. Das Massenverhältnis der bei T>200°C schmelzenden organischen Verbindung, z.B. Pentaerythrit, in Bezug auf das säurelösliche Pigment (Edukt) liegt bevorzugt bei 0,07 bis 0,20, besonders bevorzugt bei 0,08 bis 0,12.

Der Dampfdruck von Pentaerythrit ist 1013 mbar bei T=355 °C und 40mbar bei T=276°C. Bei noch geringerem Umgebungsdruck wie z.B. von weniger als 10 mbar kann Pentaerythrit bei einer Temperatur von T<260°C sublimieren. Wie bereits erwähnt liegt der Schmelzpunkt von Pentaerythrit bei 262°C. Diese Temperaturreduzierung ist insbesondere für die gelben Eisenoxidpigmente (FeOOH) wichtig, da diese ab 260°C Verfärbungen am Pigment zeigen.

Der erfinderische Einsatzbereich der säurefest gecoateten Pigmente erstreckt sich auf den Kunststoff PVC. Die thermoplastische Verarbeitung umfasst im Besonderen Extrusions- und Spritzgussprozesse, aber auch Gieß-, Kalandrier- und Blasformprozesse.

Die säurefest gecoateten Pigmente können alleine oder in Kombination mit herkömmlichen organischen oder anorganischen Pigmenten, Farb- und Füllstoffe sowie den unterschiedlichsten Kunststoff-Stabilisatoren oder Lösemitteln gemischt werden. Eine Beschränkung auf ein bestimmtes Mischungsverhältnis existiert dabei nicht. Unter Kunststoff-Stabilisatoren sind im Falle vom Kunststoff PVC die zur thermoplastischen Formgebung notwendigen Additive wie z.B. Thermostabilisatoren, Weichmacher, Säurefänger, Gleitmittel und Antioxidantien und unter Füllstoffe sind Kalkspat, Schwerspat, Talkum oder Kaolin gemeint. Die polycyclischen Pigmente, wie z.B. Kupferphthatocyanine, Chinacridone, Pyrrolpyrrole, Isoindoline, Perylene und die Azopigmente, wie z.B. Diarylgelb und Benzimidazolone sind typische Vertreter für organische Pigmente. Die wichtigsten Vertreter der anorganischen Pigmente sind TiO₂, Ruß, Ultramarine, Rutilmischphasenpigmente, Chromoxidgrün sowie eine große Bandbreite an Mischoxidpigmenten. Vertreter von Farbstoffen sind z.B. Anthrachinone, Methine, Perinone und Anthrapyridone.

Die säurefest gecoateten Pigmente können dabei direkt als Pulverkomponente oder in Mischung mit anderen Stoffen oder als Konzentrat in Form eines so genannten Masterbatches in den Zieleinsatzbereich eingearbeitet werden. Ein Masterbatch ist eine Vormischung oder (Farb-) Konzentrat, bestehend im Wesentlichen aus 40 bis 90 Gew.% eines Pigments oder Füllstoffs einer Pigmentmischung und 60 bis 10 Gew.% einer Kunststoff- und/oder Wachsmischung.

Die Einsatzkonzentration der säurefest gecoateten Pigmente in den erfinderischen Einsatzbereichen ist größer als 0,01 Gew.% und kleiner als 90 Gew.%, bevorzugt zwischen 0,05 und 20 Gew.% und besonders bevorzugt zwischen 0,1 und 10 Gew.%.

### Beispiels

### 1. Verfahren zur Herstellung der säurefest gecoateten Pigmente

Die Reaktionsmischung Nr.1, bestehend aus 5 kg Bayferrox 120 (ungecoatetes Fe₂O₃) und 0,5 kg Pentaerythritpulver, wird in einen Unterdruck-Intensivheizmischer (Eigenbau) gegeben Bei einem Druck von 1 mbar wird das Reaktionsgemisch Nr.1 unter intensivem Mischen auf 250°C aufgeheizt. Nach 15 Minuten Reaktionszeit wird belüftet und abgekühlt. Die entnommene Probe ist das säurefest gecoatete Pigment Nr.1.

Selbiges Verfahren wird für die folgenden säurefest gecoateten Pigmente durchgeführt:
- Reaktionsmischung Nr.2, bestehend aus 2 kg Bayferrox 420 (ungecoatetes FeOOH) und 0,2 kg Pentaerythrit, ergibt das säurefest gecoatete Pigment Nr.2.
- Reaktionsmischung Nr.3, bestehend aus 2 kg Bayferrox 3950 (ungecoatetes Zinkferrit der Zusammensetzung ZnFe₂O₄) und 0,2 kg Pentaerythrit, ergibt das säurefest gecoatete Pigment Nr.3.
- Reaktionsmischung Nr.4, bestehend aus 2 kg Zinkoxid Weißsiegel (ungecoatetes ZnO) und 0,2 kg Pentaerythrit, ergibt das säurefest gecoatete Pigment Nr.4.

### 2. Prüfung auf HCI-Dampf-Beständigkeit: Knetertest

Es wurde zu thermostabilisierten PVC-Mischungen jeweils 0,2 Gew.% der jeweiligen Pigmente gemischt und anschließend das Gemisch mithilfe eines Kneters (Fa. Brabender) thermisch und mechanisch beansprucht. Die PVC-Mischungen wurden im Kneter bei 190°C und 20 U/min. geknetet. Ziel ist die Generierung von HCI-Dampf durch die thermische Zersetzung des PVC's. Das Drehmoment wurde in Abhängigkeit von der Zeit bestimmt. Die Zersetzung des PVC's wird über die Drehmomentkurve ausgedrückt. Bei vollständiger Zerstörung des PVC's tritt ein charakteristisch steiler Anstieg des Drehmoments auf. Im Anschluss an den charakteristischen Anstieg verliert die PVC-Mischung seine plastischen Eigenschaften und das Probenmaterial quillt aus dem Kneter aus. Optisch ist der Zersetzungsprozess des PVC's durch eine Braun- bzw. Schwarzfärbung gekennzeichnet. Die erfindungsgemäß gecoateten Pigmente werden mit ungecoateten Proben sowie herkömmlich gecoateten Proben gemäß Tabelle 1 verglichen. Exemplarisch ist in Tabelle 1 lediglich der Verlauf einer Ca/Zn-stabilisierten PVC-Mischung dargestellt, da sich andere Thermostabilisierungssysteme ähnlich verhielten. Zusätzlich wurden eine Probe Nr.0 ohne Pigment (Pigment Nr.0) und eine Probe Nr.12 mit 0,05% Eisen(III)chlorid gefahren,

**Tabelle 1: Zersetzungskinetik von PVC in Abhängigkeit vom Pigmentzusatz**

| **Nr.** | **Pigment** | **chemische Verbindung** | **Coating** | **Zeit [min.] bis Drehmoment-Maximum** | **Drehmoment-Maximum [Nm]** | **Zeit [min.] bis zum Austritt aus Probenraum** |
|---|---|---|---|---|---|---|
| 0 | ohne | - | - | 19 | 29 | kein Austritt |
| 1 | Bayerrox 120-P | Fe₂O₃ | erfinderisch | 18 | 31 | kein Austritt |
| 2 | Bayferrox 420-P | FeOOH | erfinderisch | 18 | 32 | kein Austritt |
| 3 | Bayferrox 3950-P | ZnFe₂O₄ | erfinderisch | 18 | 30 | kein Austritt |
| 4 | ZnO-P | ZnO | erfinderisch | 15 | 29 | kein Austritt |
| 5 | Bayferrox 120 | Fe₂O₃ | ohne | 17 | 50 | 19 |
| 6 | Bayferrox 420 | FeOOH | ohne | 17 | 49 | 19 |
| 7 | Bayferrox 3950 | ZnFe₂O₄ | ohne | 17 | 47 | 19 |
| 8 | Weißsiegel | ZnO | ohne | 13 | 58 | 14 |
| 9 | Bayferrox 120-C | Fe₂O₃ | herkömmlich | 17 | 50 | 19 |
| 10 | Colortherm 10 | FeOOH | herkömmlich | 17 | 50 | 19 |
| 11 | Colortherm 30 | ZnFe₂O₄ | herkömmlich | 17 | 48 | 19 |
| 12 | Fe³⁺ | FeCl₃ | - | 16 | 51 | 17 |

Es ist aus den Messwerten zu erkennen, dass die säurefest gecoateten Pigmente ein geringeres Drehmomentmaximum ausweisen als die herkömmlich gecoateten Pigmente bzw. als die ungecoateten Pigmente. Die säurefest gecoateten PVC-Pigment-Mischungen verhalten sich nahezu identisch zur 0-Probe, vor allem in Bezug auf das Herausquellen der Proben aus dem Probenraum während des Knetvorgangs.

Die Proben mit FeCl₃ zeigen ähnliches Verhalten wie die Proben mit Eisenoxidpigmenten. Dies ist zusätzlich ein Hinweis darauf, dass Eisenionen die Zersetzung des PVC katalysieren. Selbiges gilt im Prinzip für Zinkionen. Auch sie katalysieren die Zersetzung des PVC.

Im Vergleich zu herkömmlich gecoateten Pigmenten weisen die säurefest gecoateten Pigmente eine signifikant höhere HCI-Beständigkeit bei der thermoplastischen Formgebung von PVC auf. Die gemessenen Ergebnisse am Kneter lassen sich auch in die Praxis übertragen. Bei der PVC-Extrusion bzw. beim PVC-Spritzguss wird beim Einsatz von säurefest gecoateten eisen-, mangan- oder/und zinkhaltigen Pigmenten eine verringerte Brennerbildung beobachtet.

Die Erfindung betrifft folglich die Verwendung säurefest gecoateter Pigmente in dem Kunststoff PVC. Säurelösliche Pigmente werden mit einem Coating aus einer organischen Verbindung versehen, die bei einer Temperatur von T>200°C schmilzt, damit auch bei Verarbeitungstemperaturen des PVC's von 180 bis 200°C noch ein Schutz der ansonsten säurelöslichen Pigmente vor HCI-Dampf besteht.

## Patentansprüche

1. Verwendung von mit Pentaerythrit und/oder Dipentaerythrit und/oder Benzoltricarbonsäure als eine bei T>200°C schmelzende organische Verbindung säurefest gecoateten Pigmenten, welche aus der Gruppe von säurelöslichen Pigmenten ausgewählt sind, welche aus Fe₂0₃, FeOOH, Fe₃O₄, Eisen-Mangan-Mischoxiden, ZnO, Zinkferriten und einer Kombination zweier oder mehrerer dieser Pigmente besteht, als Farb- oder Weißpigment in dem Kunststoff PVC zur Vermeidung der Brennerbildung an dem thermoplastisch verformten PVC und/oder zu dem Zweck, die säurelöslichen Pigmente bei der thermoplastischen Verarbeitung des PVC vor einer Reaktion mit HCI-Dampf, der bei der thermoplastischen Verarbeitung von PVC entsteht, zu schützen.

2. Verwendung nach Anspruch 1, wobei mehr als 0,01 Gew.% und weniger als 90 Gew.% säurefest gecoatete Pigmente eingesetzt werden, z.B. zwischen 0,05 und 20 Gew.%, z.B. zwischen 0,1 und 10 Gew.%.

3. Verwendung nach einem der Ansprüche 1 bis 2, wobei die Mantelfläche der säurelöslichen Pigmente zu mehr als 85% mit der bei T>200°C schmelzenden organischen Verbindung belegt ist.

4. Verwendung nach einem der vorangehenden Ansprüche, wobei die bei T>200°C schmelzende organische Verbindung auf die säurelöslichen Pigmente aufgedampft ist.

5. Verwendung nach einem der vorangehenden Ansprüche, wobei das Massenverhältnis der bei T>200°C schmelzenden organischen Verbindung, z.B. Pentaerythrit, bezogen auf die säurelöslichen Pigmente in dem Bereich von 0,07 bis 0,2 liegt, z.B. in dem Bereich von 0,08 bis 0,12.

6. Verwendung nach einem der vorangehenden Ansprüche, wobei die säurelöslichen Partikel eine mittlere Korngröße von weniger als 5 µm haben, z.B. von weniger als 1 µm.

7. PVC-Kunststoff mit säurefest gecoateten Pigmenten, wobei die säurefest gecoateten Pigmente säurelösliche Pigmente aufweisen, welche aus der Gruppe ausgewählt sind, welche aus Fe₂0₃, FeOOH, Fe₃O₄, Eisen-Mangan-Mischoxiden, ZnO, Zinkferriten und einer Kombination zweier oder mehrerer dieser Pigmente besteht, und welche mit Pentaerythrit und/oder Dipentaerythrit und/oder Benzoltricarbonsäure als eine bei T>200°C schmelzende organische Verbindung säurefest gecoatet sind.

8. PVC-Kunststoff mit säurefest gecoateten Pigmenten nach Anspruch 7, wobei mehr als 0,01 Gew.% und weniger als 90 Gew.% säurefest gecoatete Pigmente eingesetzt sind, z.B. zwischen 0,05 und 20 Gew.%, z.B. zwischen 0,1 und 10 Gew.%.

9. PVC-Kunststoff mit säurefest gecoateten Pigmenten nach Anspruch 7 oder 8, wobei die Mantelfläche der säurelöslichen Pigmente zu mehr als 85% mit der bei T>200°C schmelzenden organischen Verbindung belegt ist.

10. PVC-Kunststoff mit säurefest gecoateten Pigmenten nach einem der Ansprüche 7 bis 9, wobei die bei T>200°C schmelzende organische Verbindung auf die säurelöslichen Pigmente aufgedampft ist.

11. PVC-Kunststoff mit säurefest gecoateten Pigmenten nach einem der Ansprüche 7 bis 10, wobei die säurelöslichen Partikel eine mittlere Korngröße von weniger als 5 µm haben, z.B. von weniger als 1 µm.

12. PVC-Kunststoff mit säurefest gecoateten Pigmenten nach einem der Ansprüche 7 bis 11, wobei das Massenverhältnis der bei T>200°C schmelzenden organischen Verbindung, z.B. Pentaerythrit, bezogen auf die säurelöslichen Pigmente in dem Bereich von 0,07 bis 0,2 liegt, z.B. in dem Bereich von 0,08 bis 0,12.

## Claims

1. A use of pigments which are selected from the group of acid-soluble pigments consisting of Fe₂O₃, FeOOH, Fe₃O₄, iron manganese mixed oxides, ZnO, zinc ferrites and a combination of two or more of these pigments, and which are coated acid-resistant with pentaerythritol and/or dipentaerythritol and/or benzenetricarboxylic acid as an organic compound melting at T>200°C, as a color pigment or a white pigment in the synthetic material PVC, for avoiding the formation of burns at the thermoplastically deformed PVC and/or for the purpose of protecting the acid-soluble pigments during the thermoplastic processing of the PVC against a reaction with HCI vapor which is formed during the thermoplastic processing of PVC.

2. The use of claim 1, wherein more than 0.01 wt.% and less than 90 wt.% of acid-resistant coated pigments are used, for example between 0.05 and 20 wt.%, for example between 0.1 and 10 wt.%.

3. The use of any of claims 1 to 2, wherein more than 85% of the shell surface of the acid-soluble pigments is occupied with the organic compound melting at T>200°C.

4. The use of any of the preceding claims, wherein the organic compound melting at T>200°C is vapor-deposited onto the acid-soluble pigments.

5. The use of any of the preceding claims, wherein the mass ratio of the organic compound melting at T>200°C, for example pentaerythritol, in relation to the acid-soluble pigments is in the range of 0.07 to 0.2, for example in the range of 0.08 to 0.12.

6. The use of any of the preceding claims, wherein the acid-soluble particles have an average grain size of less than 5 µm, for example of less than 1 µm.

7. A PVC synthetic material with acid-resistant coated pigments, wherein the acid-resistant coated pigments comprise acid-soluble pigments selected from the group consisting of Fe₂O₃, FeOOH, Fe₃O₄, iron manganese mixed oxides, ZnO, zinc ferrites and a combination of two or more of these pigments, and which are coated acid-resistant with pentaerythritol and/or dipentaerythritol and/or benzenetricarboxylic acid as an organic compound melting at T>200°C.

8. The PVC synthetic material with acid-resistant coated pigments of claim 7, wherein more than 0.01 wt.% and less than 90 wt.% of acid-resistant coated pigments are used, for example between 0.05 and 20 wt.%, for example between 0.1 and 10 wt.%.

9. The PVC synthetic material with acid-resistant coated pigments of claim 7 or 8, wherein more than 85% of the shell surface of the acid-soluble pigments is occupied with the organic compound melting at T>200°C.

10. The PVC synthetic material with acid-resistant coated pigments of any of claims 7 to 9, wherein the organic compound melting at T>200°C is vapor-deposited onto the acid-soluble pigments.

11. The PVC synthetic material with acid-resistant coated pigments of any of claims 7 to 10, wherein the acid-soluble particles have an average grain size of less than 5 µm, for example of less than 1 µm.

12. The PVC synthetic material with acid-resistant coated pigments of any of claims 7 to 11, wherein the mass ratio of the organic compound melting at T>200°C, for example pentaerythritol, in relation to the acid-soluble pigments is in the range of 0.07 to 0.2, for example in the range of 0.08 to 0.12.

## Revendications

1. Utilisation de pigments revêtus d'un revêtement résistant aux acides avec du pentaérythritol et/ou du dipentaérythritol et/ou de l'acide benzènetricarboxylique, en tant que composé organique fondant à T>200°C, qui sont choisis dans le groupe des pigments solubles dans les acides, qui sont constitués de Fe₂O₃, de FeOOH, de Fe₃O₄, d'oxydes mixtes de fer et de manganèse, de ZnO, de ferrites de zinc et d'une combinaison de deux ou plus de ces pigments, en tant que pigments colorés ou pigments blancs dans le plastique PVC, pour éviter la formation de brûlures sur le PVC ayant subi une transformation thermoplastique, et/ou dans le but de protéger les pigments solubles dans les acides, lors de la mise en oeuvre thermoplastique du PVC, d'une réaction avec le HCI vapeur qui se forme lors de la mise en oeuvre thermoplastique du PVC.

2. Utilisation selon la revendication 1, pour laquelle on utilise plus de 0,01 % en poids et moins de 90 % en poids de pigments revêtus d'un revêtement résistant aux acides, p.ex. entre 0,05 et 20 % en poids, p.ex. entre 0,1 et 10 % en poids.

3. Utilisation selon l'une des revendications 1 à 2, pour laquelle la surface de la couche de pigments solubles dans les acides est occupée à raison de plus de 85 % par le composé organique fondant à T>200°C.

4. Utilisation selon l'une des revendications précédentes, pour laquelle le composé organique fondant à T>200°C est déposé en phase vapeur sur les pigments solubles dans les acides.

5. Utilisation selon l'une des revendications précédentes, pour laquelle la proportion en masse du composé organique fondant à T>200°C, p.ex. le pentaérythritol, rapportée aux pigments solubles dans les acides, est comprise dans la plage de 0,07 à 0,2, p.ex. dans la plage de 0,08 à 0,12.

6. Utilisation selon l'une des revendications précédentes, pour laquelle les particules solubles dans les acides ont une granulométrie moyenne inférieure à 5 µm, p.ex. inférieure à 1 µm.

7. Plastique PVC comportant des pigments revêtus d'un revêtement résistant aux acides, les pigments revêtus d'un revêtement résistant aux acides comprenant des pigments solubles dans les acides, qui sont choisis dans le groupe consistant en le Fe₂0₃, le FeOOH, le Fe₃O₄, les oxydes mixtes de fer et de manganèse, le ZnO, les ferrites de zinc et une combinaison de deux ou plus de ces pigments, et qui sont revêtus d'un revêtement résistant aux acides avec du pentaérythritol et/ou dipentaérythritol et/ou de l'acide benzènetricarboxylique, en tant que composé organique fondant à T>200°C.

8. Plastique PVC comportant des pigments revêtus d'un revêtement résistant aux acides selon la revendication 7, dans lequel on utilise plus de 0,01 % en poids et moins de 90 % en poids de pigments revêtus d'un revêtement résistant aux acides, p.ex. entre 0,05 et 20 % en poids, p.ex. entre 0,1 et 10 % en poids.

9. Plastique PVC comportant des pigments revêtus d'un revêtement résistant aux acides selon la revendication 7 ou 8, dans lequel la surface latérale des pigments solubles dans les acides est occupée à raison de plus de 85 % par le composé organique fondant à T>200°C.

10. Plastique PVC comportant des pigments revêtus d'un revêtement résistant aux acides selon l'une des revendications 7 à 9, dans lequel le composé organique fondant à T>200°C est déposé en phase vapeur sur les pigments solubles dans les acides.

11. Plastique PVC comportant des pigments revêtus d'un revêtement résistant aux acides selon l'une des revendications 7 à 10, dans lequel les particules solubles dans les acides ont une granulométrie moyenne inférieure à 5 µm, p.ex. inférieure à 1 µm.

12. Plastique PVC comportant des pigments revêtus d'un revêtement résistant aux acides selon l'une des revendications 7 à 11, dans lequel la proportion en masse du composé organique fondant à T>200°C, p.ex. le pentaérythritol, rapportée aux pigments solubles dans les acides, est comprise dans la plage de 0,07 à 0,2, p.ex. dans la plage de 0,08 à 0,12.
